# EUROPEAN PATENT APPLICATION

(11) **EP 1 971 050 A1**
(43) Date of publication of application: **17.09.2008**
(21) Application number: 06817918.3
(22) Date of filing: 28.11.2006
(51) Int. Cl.: H04B 10/02, H04L 12/40, H04J 14/02

(54) **AN OPTICAL TRANSPORT NODE CONSTRUCTION DEVICE AND SERVICE DISPATCH METHOD**

(30) Priority: 07.12.2005 CN 200510127774
(71) Applicant: Huawei Technologies Co., Ltd., Longgang District, Shenzhen Guangdong 518129 (CN)
(72) Inventor: ZHANG, Jianmei, Guangdong 18129 (CN); JIN, Yuzhi, Guangdong 18129 (CN); HUANG, Zhiyong, Guangdong 18129 (CN)
(74) Representative: Hengelhaupt, Jürgen
(86) International application number: PCT/CN2006/003202
(87) International publication number: WO 2007/065347

(57) **Abstract**

An optical transport network node construction device and service dispatch method, include: the dispatch unit is the integration dispatch unit, which contains the large capacity transparent cross unit and one or multiple dedicated cross units connected to the transparent cross unit, the large capacity transparent cross unit accesses the service, performs cross configuration directly or dispatches the service to the connected dedicated cross units for further processing based on the configuration need of the access service, dispatches the signal processed to the requested output port, and provides it for the service process unit and the (WDM) process unit to perform the continued process. The invention realizes the organic interfusion of the original independent (SDH) and (OTN) devices, adapts the coexist application situation of the voice service and the large particle data service currently, sets the uniform bus construction which can be configured to different combinations to adapt different client requests respectively, and interfuses the (SDH/SONET) system and the (WDM) system together to realize the uniform management.

## Description

This application claims the priority of the Chinese patent application No. 200510127774.1 filed with the Chinese Patent Office on December 7, 2005, entitled "Node Structure, Apparatus and Service Scheduling Method in an Optical Transport Network", which is incorporated by reference herein in its entirety.

### Field of the Invention

The present invention relates to the technical field of optical communications, especially to a design method and apparatus of the Optical Transport Network (OTN), and in particular, to a node structure, apparatus and service scheduling method in an Optical Transport Network.

### Background of the Invention

With the development of communication technology, capacity of the transmission system keeps expanding. As to the synchronous digital hierarchy/synchronous optical network (SDH/SONET) technology, the transmission capacity has evolved from the original 51Mbps to the current 155Mbps, 622Mbps, 2.5Gbps and 10Gbps and even the capacity of 40Gbps is commercialized gradually. At present, the transport network is still mainly established on the basis of SDH/SONET for bearing services such as voice service, data service and video service. With the increasing popularization of broad-band service in enterprises, residential quarters and families, data, video or multimedia service consumes much more bandwidth resources. For example, current broad-band TV adopts a compression method of MPEG-2 in each channel that demands for a bandwidth of about 4Mbps, thus occupying a bandwidth of 1Gbps or so if the broad-band TV is supposed to carry 200 sets of programs. The main requirements on the transport network raised by the broad-band services are being able to provide sufficient bandwidth resources as well as being able to cope with different services flexibly.

The SDH/SONET network is designed for the voice service, and mainly designed for scheduling the 64Kbps voice service. Meanwhile, in the SDH/SONET network, due to limited bandwidth resources, a fine grain scheduling should be implemented. Therefore, the VC12/VT1.5 grain scheduling is an indispensable function in the age of SDH/SONET. Different equipment manufacturers generally evaluate the performance of an SDH/SONET apparatus according to the VC12/VT1.5 scheduling capability.

With the expansion of various broad-band services such as IPTV, VOD and Triple-play, users are craving for even broader bandwidth, so that apart from providing the scheduling function required in the conventional voice service processing, the transport network needs to solve the problem of flexibly providing a broad bandwidth, i.e. the bandwidth is broadened and can be flexibly allocated. The solution of combining the capability of providing huge bandwidth resources of the conventional wavelength division multiplexing (WDM) network with the function of performing flexible scheduling (on the optical layer and electrical layer) of the optical transport network (OTN) is playing a role of increasing importance in the transport field. Nowadays, more and more operators are considering the scheduling capability of the OTN to be a required function of a high-end transport network.

Figure 1 shows the structure of a conventional OTN node. As illustrated therein, manufacturers of the transmission system usually provide an SDH/SONET apparatus and a WDM/OTN apparatus simultaneously. The SDH/SONET apparatus is used for scheduling and grooming of the service, and the WDM apparatus is used for providing sufficient bandwidth resources and implementing the WDM level network management and service management in combination with the management features of the OTN. After the processing such as converging, grooming and scheduling is performed on the service signal by a centralized virtual container (VC)/synchronous transport signal (STS) cross connect unit (XC), and after a framing processing via an SDH/SONET line card, the SDH/SONET apparatus generates an STM-n/OC-3n signal. The STM-n/OC-3n signal is sent to the WDM system and processed by a wavelength converter, or may be OTN digital wrapped in advance, so as to generate a signal with the prescribed wavelength recommended by the International Telecommunication Union - Telecommunication Standardization Sector (ITU-T). For a dedicated client service, an ITU-T wavelength may be generated via OTN digital wrapping, or via wavelength conversion that is performed, directly. Then the ITU-T wavelength is processed by a multiplexer. There are two kinds of apparatus in the apparatus networking, i.e., SDH/SONET and WDM apparatus, which are simply stacked together to implement the functions such as service scheduling, transporting and bandwidth provision. Consequently, the network management system has to manage two sets of apparatus simultaneously, which increases the apparatus cost and the operating cost.

In the prior art described above, the network system needs two separate sets of apparatus. Therefore, the management is complicated and the degree of the system integration is low. Furthermore, both of the two sets of apparatus need optical interfaces, which increases the apparatus cost.

Figure 2 is a cross connect structure of the SDH/SONET and OTN disclosed in WO 03/073784, which includes an SDH cross matrix VC-KF for performing cross connection on the SDH signal, a transparent cross matrix OTN-KF for the cross connection of the OTN signal. These two cross matrixes are inter-connected via converter units U10 and U11, thus a conversion between the SDH network and the OTN network may be achieved.

This structure, in which the SDH cross matrix and the OTN cross matrix are connected with each other via the converter units to implement a coupling of the two cross matrix, has the following disadvantages: it is difficult to determine the number of the converter units between the SDH and OTN cross matrixes because the amount of signals to be exchanged between the SDH and OTN cross matrixes is variable. Furthermore, the SDH cross matrix and the OTN cross matrix are two independent cross connect units, and the service processing units as well as the converters need to be connected with these two cross connect units simultaneously. Therefore, great burden is imposed upon the mother-board bus and the apparatus is complicated.

With the domination of IP technology over network, the traditional voice service is fading and the demand for SDH/SONET service stops increasing, so that the most important task that transport network now faces is how to effectively have large amount of data services (mostly are Ethernet services, including a small percentage of voice services) transported and groomed with ease.

### Summary of the Invention

The embodiments of the present invention provide a node structure, an apparatus and a service scheduling method in an optical transport network (OTN), with which the SDH /SONET system and WDM system are incorporated, and a unified management may be implemented, thus a flexible processing of service signals may be realized.

An embodiment of the present invention provides a node structure in an optical transport network, including a service scheduling unit;

the service scheduling unit is a centralized scheduling unit, which includes a transparent cross connect unit and a dedicated cross connect unit connected with the transparent cross connect unit; and

the transparent cross connect unit performs transparent cross connection directly for an accessed service, or schedules the accessed service to the connected dedicated cross connect unit for further processing.

Preferably, the node structure in the optical transport network further includes a service processing unit; the centralized scheduling unit is connected with at least one service processing unit via a bus to provide a centralized scheduling capability for a signal between service processing units.

An embodiment of the present invention provides an optical transport network apparatus, including a service processing unit and a wavelength division multiplexing processing unit; the apparatus further includes a transparent cross connect unit and at least one dedicated cross connect unit;

the transparent cross connect unit is connected with the service processing unit so as to implement a transparent cross connection and scheduling between services processed by the service processing unit, or to schedule the services processed by the service processing unit to the dedicated cross connect unit for further processing; and

the wavelength division multiplexing processing units is adapted to convert a wavelength signal output by the service processing unit into a multi-wavelength optical signal by multiplexing; or adapted to convert the multi-wavelength optical signal into mono-wavelength optical signals by demultiplexing, and send the mono-wavelength optical signals to the service processing unit for processing.

The present invention provides an optical transport network apparatus, including a centralized scheduling unit and a service processing unit, wherein at least one first slot for installing a centralized scheduling unit and a plurality of second slots for installing service processing units are configured on a mother board of the optical transport network apparatus;

The first slot and the second slots are connected with each other via buses, so as to implement a scheduling of a signal processed by the service processing unit via the centralized scheduling unit;

Part of the second slots are connected with each other via buses, so as to implement a scheduling of the signal among part of the service processing units.

An embodiment of the present invention further provides a method for performing service scheduling in an optical transport network node, including:

establishing a centralized scheduling unit with a transparent cross connect unit and one or more dedicated cross connect units connected with the transparent cross connect unit;

accessing, by the transparent cross connect unit, all service signals output from a service processing unit; sending, by the transparent cross connect unit, the service signals, for which a transparent cross connection should be performed, from an input port to an output port through cross connection; or

sending an input signal to the dedicated cross connect unit for further processing.

The centralized scheduling unit provided in the embodiments of the present invention is implemented by connecting the transparent cross connect unit with the cross connect unit. The transparent cross connect unit may access any services without limiting the form of external ports. The transparent cross connect unit then either perform cross connection directly or schedules the accessed service to the connected cross connect unit for further processing in accordance with the configuration demands of the accessed services.

According to a specific embodiment of the present invention, in the existing optical network system, the OTN transparent cross connect unit and the SDH cross connect unit are integrated in the centralized scheduling unit, thus achieving an organic combination of the SDH and OTN apparatus that used to be separate, which is suitable for the application scenario in which the voice service and other data services coexist at present.

As can be seen from the embodiments of the present invention that by adopting a uniform bus architecture, different combinations may be configured to satisfy the demands of different users respectively, and the SDH/SONET system may be incorporated with the WDM system, so as to realize a unified management. By adopting this node structure, apparatus or service scheduling method, it is possible to realize the service scheduling on different levels or according to different application demands.

Because all the board cards are directly connected with the transparent cross connect unit, the bus interfaces between the mother board and the service processing unit may be uniform, so that the board cards of different service processing units may be inserted mixedly onto the slots of the mother board which have a uniform interface. Therefore, management and installation may be facilitated.

According to the invention, the scheduling demands in the centralized scheduling unit may be reduced by adopting the distributed scheduling method, thus the system cost may be saved.

### Brief Description of the Drawings

Figure 1 is a diagram illustrating the structure of a conventional optical transport network (OTN) node;

Figure 2 is a diagram illustrating the cross connect structure of the SDH/SONET and OTN disclosed in the patent document WO 03/073784;

Figure 3 is a schematic diagram illustrating the structure of an optical network node having a centralized scheduling unit according to an embodiment of the present invention;

Figure 4 is a diagram illustrating the structure of an optical network node having a centralized scheduling unit attached with a VC cross connect unit according to an embodiment of the present invention;

Figure 5 is a diagram illustrating the structure of a frequently used node in the optical network according to an embodiment of the present invention;

Figure 6 is a diagram illustrating the structure of an optical network node integrated with a distributed transparent cross connect unit according to an embodiment of the present invention;

Figure 7 is a diagram illustrating the structure of an optical network node having a centralized packet switching function according to an embodiment of the present invention;

Figure 8 is a diagram illustrating the structure of an optical network node that adopts ROADM or PXC to perform the wavelength scheduling according to an embodiment of the present invention;

Figure 9 is a diagram illustrating a bus architecture of an optical transport network apparatus according to an embodiment of the present invention.

### Detailed Description of the Embodiments

To make the objects, technical solutions and advantages of the invention more clear, the invention will now be further described in detail in conjunction with the drawings.

Figure 3 is a diagram illustrating the structure of an optical network node including a centralized scheduling unit according to an embodiment of the present invention. The optical network node has a centralized scheduling unit, which includes a transparent cross connect unit (Transparent XC) of large capacity and one or more dedicated cross connect units (Dedicated XC) connected with the transparent XC. The transparent XC has the capability to perform cross scheduling for all kinds of services, and the dedicated XC is able to deal with one or more services. In the direction from the client side to the line side, various client side signals are input to the transparent XC after being processed by the service processing unit on the client side. The transparent XC may send the input signals directly to different processing units on the line side transparently via cross connection in accordance with the control of a controlling unit (not shown). Alternatively, the signals may be sent to a dedicated XC via cross connection for further processing, and then output from the dedicated XC to different service processing units on the line side. Signals output from the service processing units on the line side may undergo wavelength division multiplexing in a wavelength division multiplexing (WDM) processing unit, and the multiplexed signals are output to optical fiber lines for transmission. The processing in the direction from the line side to the client side is similar to that described above and will not be described in detail again.

The transparent XC may be implemented with a crosspoint or a crossbar. The dedicated XC may be a time division multiplexing (TDM) XC, a packet switching unit, an asynchronous transfer mode (ATM) switching unit with cell switching capability, or other dedicated XC with dedicated service processing capability. Further, the TDM XC may be a VC cross connect unit (VC-XC) for processing the SDH/SONET service. The packet switching unit may be a layer-2 switching unit for processing the data service.

In the practical product design, the service processing unit is usually designed as an independent board card, and is connected to the transparent XC of the centralized scheduling unit via the bus on the mother board. Because all these board cards are directly connected to the transparent XC, the bus interfaces between the mother board and the service processing unit may be uniform, so that the board cards of different service processing units may be mixedly inserted in the slots of the mother board with uniform interfaces. Therefore, management and installation are facilitated.

Figure 4 is a diagram illustrating the structure of an optical network node having a centralized scheduling unit with a VC-XC. In the application of OTN, the centralized scheduling unit generally includes a transparent XC of large capacity connected with a VC-XC. The transparently cross matrix may be adopted to implement the transparent scheduling function of the transparent XC. The VC-XC may be connected with the transparent XC to implement the cross connecting function of the SDH service. The transparent XC functions as a main scheduling module and perform a unified scheduling for all the signals processed by the centralized scheduling unit, including the optical channel data unit (ODUj) signal and STM-M signal. Specifically, the transparent cross connection is performed, for the ODUj signal that is to be OTN scheduled directly, then the ODUj signal is sent to the destination output port; whereas the SDH signal for which the VC cross connection needs to be performed is further scheduled to the VC-XC for processing, and the SDH signal after the VC cross connection is subject to the transparent cross connection, scheduled to the desired output port, and sent to the service processing unit for subsequent processing.

The structure of the optical network node illustrated in Figure 4 further includes a plurality of service processing units, which are SDH service processing unit on the client side, ONT service processing unit on the client side, SDH service processing unit on the line side, and ONT service processing unit on the line side, respectively.

One or more STM-M signals are input to the SDH service processing unit on the client side. After being processed by a framer inside the service processing unit, if it is required to generate an OTN signal directly, an ODUj signal is generated through OTN mapping and then sent to the transparent XC for scheduling. Alternatively, if it is required that a further scheduling and/or grooming should be performed among a plurality of SDH service processing units by the SDH XC, an STM-M signal is generated and sent to the corresponding SDH XC by the transparent XC for scheduling and/or grooming.

One or more optical channel transport unit (OTUk) signals are input to the ONT service processing unit for corresponding processing. If only an ODUj level scheduling is required, ODUj signals are generated via a de-mapping processing, or a plurality of low speed ODUj signals are generated via a de-multiplexing processing. These signals are sent to the transparent XC to be cross connected to the service processing unit at the destination line side. If an SDH signal is contained in the OTUk signal and needs to be further scheduled by the SDH XC, the SDH signal is generated by the processing such as de-mapping. After that, an STM-M signal is generated by an SDH framer and sent to the SDH XC via the transparent XC for processing, and then sent back to the transparent XC to be scheduled to the service processing unit at the destination line side.

This structure of the node further includes a WDM processing unit, which is adapted to convert a plurality of WMD wavelength signals into a multi-wavelength optical signal by multiplexing, and send the multi-wavelength optical signal to the optical fiber for transmission. Alternatively, the WDM processing unit is adapted to convert the multi-wavelength optical signal into mono-wavelength optical signals by demultiplexing, and send the mono-wavelength optical signals to the service processing unit on the line side for processing.

Figure 5 is a diagram illustrating the structure of an optical network node according to another embodiment of the present invention. This node structure includes a centralized scheduling unit that is composed of a transparent XC of large capacity connected with an SDH XC. The transparent XC may be implemented with an asynchronous crosspoint switch, and the SDH XC may be implemented with SDH/SONET cross connect which has a high order cross connection (VC4/VC3/STS-1), a low order cross connection (VC12/VT1.5) or a hybrid of the high order cross connection and low order cross connection. The external interfaces of the centralized scheduling unit are all provided by the transparent XC. The external interfaces provided by the XC may receive ODU1/STM-16 signals that have been processed by the service processing units in the system. The number of inter-connecting buses between the transparent XC and the SDH XC may be determined in accordance with the actual requirements of the system or the traffic scheduled by the SDH.

Service processing units includes SDH service processing units on the client side, SDH service processing units on the line side, OTN service processing units on the client side, and OTN service processing units on the line side. Different SDH service processing units on the client side may implement following different functions: processing an input STM-1/4 signal and generating an STM-16 frame, sending the STM-16 frame to the SDH XC via the transparent XC for processing; processing the input STM-16 signal and generating the STM-16 frame, sending the Stem-16 frame to the SDH XC via the transparent XC for processing, or mapping the input STM-16 signal into the ODU1 so that the input Stem-16 signal is directly processed by the transparent XC; processing an STM-64 signal and generating 4 STM-16 frames, sending the STM-16 frames to the SDH XC via the transparent XC for processing. Different SDH service processing units on the line side may implement following different functions: performing a framing processing on 1 or 4.STM-16 signals that have been processed by the SDH XC, generating STM-16 or STM-64 line signals for WDM processing directly, or mapping the STM-16 or STM-64 line signals into the OTU1 or OTU2 to generate an ITU-T standard wavelength and then performing a WDM processing. The OTN service processing unit on the client side may process the OTUk signal, by de-mapping or de-multiplexing, into one path or multi-path ODU1 signals. The ODU1 signal may be further de-mapped to the STM-16 signal. The OTN service processing unit on the line side may process, by mapping or multiplexing, the one path or multi-path ODU1/STM-16 hybrid signals into OTUk line signals. The above is a description of the processing of each service processing units in one direction only. The processing in the opposite direction is similar to that described above.

The case of processing two kinds of services as shown in Figure 5 is taken as an example to illustrate how to implement the service scheduling. An optical signal containing an OTU2 signal (indicated with ① in the drawing) generated through wavelength de-multiplexing by the WDM processing unit enters a service processing unit 510 on the line side and is subject to ODU2/ODU1 de-multiplexing in the first place to generate 4 tributary ODU1 signals. Then the 4 tributary ODU1 signals may further be de-mapped to generate an STM-16 signal when required. In this embodiment, by the service processing unit 510 on the line side, the first ODU1 signal is directly sent via the transparent XC to another OTN service processing unit 520 on the line side. Then the first ODU1 signal is multiplexed into an OTU2 line signal via an ODU1/ODU2 multiplexing; the second ODU1 signal is output to an OTN service processing unit 530 on the client side via the transparent XC, and terminated at the local port. The third STM-16, after being processed by the transparent XC and VC-XC, is output to an SDH service processing unit 540 on the client side and terminated at the local port.

In Figure 5, another optical signal containing an STM-64 signal (indicated with ② in the drawing) generated through wavelength de-multiplexing by the WDM processing unit enters another SDH service processing unit 550 on the line side. 4 paths of STM-16 signals are generated through a framer in the SDH service processing unit 550 on the line side, among which 2 STM-16 signals are sent via the transparent XC to the VC-XC for further integration. The integrated STM-16 signals are returned by the VC-XC to the transparent XC, and then sent by the transparent XC to two SDH service processing units 560, 570 on the client side for processing. The service processing in the opposite direction is similar to that described above.

Figure 6 is a diagram illustrating the structure of a node integrated with a distributed transparent XC according to an embodiment of the present invention. The core of this node structure is still a centralized scheduling unit, and each service processing unit further includes a transparent XC of small capacity. Furthermore, there exist distributed inter-connected buses between the service processing units. These buses pairwise connect the transparent XCs of small capacity and are able to transport the ODUj signal. The ODUj signal generated by the OTN service processing unit may be scheduled unitedly by the transparent XC in the centralized scheduling unit, and the ODUj signal generated by the OTN service processing units which are connected via distributed inter-connected buses may also be scheduled through the distributed inter-connected buses. In practical network applications, the service scheduling demands on edge nodes are not great. Therefore, the scheduling demands on the centralized scheduling unit may be reduced by adopting the distributed scheduling mode, thus the system cost may be saved.

Figure 7 is a diagram illustrating the structure of a node having a centralized packet switching capability according to an embodiment of the present invention. In the centralized scheduling unit, a dedicated XC includes a VC cross connect unit (VC-XC) and a packet switching unit (Packet Switch). Both the VC-XC and the packet switching unit are connected to a transparent XC. Meanwhile, this system also includes corresponding data service processing units having data service processing capability. The data service processing unit on the client side may access Ethernet services such as Fast Ethernet (FE) service, Gigabit Ethernet (GE) service, 10 Gigabit Ethernet (10GE) service, etc., and perform packet processing. For example, a packet signal is generated after a layer 2 / layer 3 (L2/L3) switching, and then sent to a transparent XC via inter-connected buses. The buses may be inter-connected in a GE signal inter-connection mode, or may send 10GE signals via a 10 Gigabit attachment unit interface (XAUI). The OTN transparent XC then sends the packet signal to the packet switching unit for further processing. The Ethernet signal that has been processed by the packet switching unit is sent via the transparent XC to the data service processing unit on the line side. The data service processing unit on the line side may further perform packet processing to generate a converged Ethernet signal GE/10GE, which is then modulated to an optical signal of ITU-T wavelength and sent to the WDM processing unit for transmission. In order to provide a monitoring capability of the WDM line, the GE/10GE signal may also be mapped to OTUk, modulated to the optical signal of ITU-T wavelength and then sent to the WDM processing unit for transmission.

Figure 8 is a diagram illustrating the structure of a node that adopts a reconfigurable optical add drop multiplexer (ROADM) or a photonic cross connect (PXC) to perform wavelength processing. In a system with an OTN/SDH centralized scheduling unit, the optical layer processing may adopt the ROADM or PXC with wavelength scheduling capability to achieve the scheduling on the wavelength level. The service signals that do not add or drop at the present node are directly scheduled by the ROADM or PXC, passed through the optical layer at the present node and transferred to a downstream node. With the node adopting such a structure, a service scheduling on different granularity such as wavelength level, VC level, or packet level may be implemented.

An embodiment of the present invention further provides an example of the architecture of the mother board bus as illustrated in Figure 9. This bus architecture is further extended on the basis of the centralized scheduling unit, and provides the system with both centralized scheduling capability and distributed scheduling capability. This bus architecture may serve as the foundation of the mother board bus in the embodiment as illustrated in Figure 6.

In Figure 9, the central slot is used for installation of a centralized scheduling unit, while the dedicated slots on both sides are used for installation of service processing units. The centralized scheduling unit is connected with each service processing unit via buses. The number of the buses in each group is determined according to the processing capability of each service processing unit, and the signal generated by each service processing unit may be fed to the centralized scheduling unit. Meanwhile, distributed inter-connected buses exist between the dedicated slots for installation of the service processing units, so as to implement the service scheduling between the service processing units.

Additional advantages and modifications will readily occur to those skilled in the art. Therefore, the invention in its broader aspects is not limited to the specific details and representative embodiments shown and described herein. Accordingly, various modifications and variations may be made without departing from the spirit or scope of the invention as defined by the appended claims and their equivalents.

## Claims

1. A node structure in an optical transport network, comprising a service scheduling unit, wherein:
the service scheduling unit is a centralized scheduling unit, which comprises a transparent cross connect unit and a dedicated cross connect unit attached to the transparent cross connect unit; and
the transparent cross connect unit performs transparent cross connection directly for an input service, or schedules the input service to the connected dedicated cross connect unit for further processing.

2. The node structure in the optical transport network according to claim 1, wherein:
the node structure in the optical transport network further comprises a service processing unit; and
the centralized scheduling unit is connected to at least one service processing unit via a bus to provide a centralized scheduling capability for a signal between service processing units.

3. The node structure in the optical transport network according to claim 2, wherein
the service processing units are interconnected via distributed buses to implement the transparent cross connection and scheduling of the service between a plurality of service processing units.

4. The node structure in the optical transport network according to claim 1, wherein
the transparent cross connect unit is implemented with a crosspoint switch.

5. The node structure in the optical transport network according to claim 1, wherein
the dedicated cross connect unit is a time division multiplexing cross connect unit, a packet switching unit, or an asynchronous transfer mode switching unit with cell switching capability; or a combination thereof.

6. The node structure in the optical transport network according to claim 5, wherein
the time division multiplexing cross connect unit is a virtual container cross connect unit for processing an SDH service.

7. The node structure in the optical transport network according to claim 5, wherein
the packet switching unit is a layer 2 or layer 3 switching unit for processing a data service.

8. The node structure in the optical transport network according to claim 6, wherein
the transparent cross connect unit is implemented with an asynchronous crosspoint switch; and
the virtual container cross connect unit is implemented with an SDH cross connect chip which has a high order cross connection, a low order cross connection or a hybrid of the high order cross connection and low order cross connection.

9. The node structure in the optical transport network according to any of the claims I - 8, wherein
the node structure in the optical transport network further comprises:
a wavelength division multiplexing processing unit, adapted to perform wavelength multiplexing or de-multiplexing; and/or
an optical add drop multiplexer or a photonic cross connect unit, adapted to perform wavelength scheduling.

10. An optical transport network apparatus, comprising a service processing unit and a wavelength division multiplexing processing unit, wherein the apparatus further comprises a transparent cross connect unit and at least one dedicated cross connect unit;
the transparent cross connect unit is connected with the service processing unit, so as to implement a transparent cross connection and scheduling between services processed by the service processing unit, or to schedule the services processed by the service processing unit to the dedicated cross connect unit for further processing; and
the wavelength division multiplexing processing units is adapted to convert a wavelength signal output by the service processing unit into a multi-wavelength optical signal by multiplexing; or adapted to convert the multi-wavelength optical signal into mono-wavelength optical signals by demultiplexing, and send the mono-wavelength optical signals to the service processing unit for processing.

11. The optical transport network apparatus according to claim 10, wherein
each of the service processing units comprises a transparent cross connect unit of small capacity; distributed inter-connected buses exist between the service processing units and pairwise connect the transparent cross connect units of small capacity; signals generated by the service processing units are scheduled via the distributed inter-connected buses.

12. The optical transport network apparatus according to claim 10, wherein the transparent cross connect unit is implemented with a crosspoint switch.

13. The optical transport network apparatus according to claim 10, wherein
the dedicated cross connect unit is a virtual container cross connect unit for performing cross connection for a synchronous digital hierarchy service, a packet switching unit for processing a data service, or an asynchronous transfer mode cross connect unit; or a combination thereof.

14. An optical transport network apparatus, comprising a centralized scheduling unit and service processing units, wherein,
at least one first slot for installing a centralized scheduling unit and a plurality of second slots for installing service processing units are configured on a mother board of the optical transport network apparatus;
the first slot and the second slots are connected with each other via buses, so as to implement a scheduling of signals processed by the service processing units via the centralized scheduling unit;
part of the second slots are connected with each other via buses, so as to implement a scheduling of the signals among part of the service processing units.

15. The optical transport network apparatus according to claim 14, wherein
the optical transport network apparatus further comprises:
a wavelength division multiplexing processing unit, adapted to perform wavelength division or multiplexing; and/or
a reconfigurable optical add drop multiplexer or a photonic cross connect unit, adapted to perform scheduling of wavelength signals output from the service processing units.

16. A method for performing service scheduling in an optical transport network node, comprising:
establishing a centralized scheduling unit with a transparent cross connect unit and one or more dedicated cross connect units connected with the transparent cross connect unit;
accessing, by the transparent cross connect unit, all service signals output from service processing units; sending, by the transparent cross connect unit, the service signals, for which a transparent cross connection should be performed, from an input port to an output port through cross connection; or
sending an input signal to the dedicated cross connect unit for further processing.

17. The method for performing service scheduling according to claim 16, wherein
a signal processed by the centralized scheduling unit includes an optical channel data unit signal and/or an STM-M signal;
the transparent cross connect unit performs transparent cross connection for the optical channel data unit signal that needs to be transparent scheduled directly, and sends the optical channel data unit signal to a destination output port;
the STM-M signal, for which a virtual container cross connection should be implemented, is further scheduled to a virtual container cross connect unit for processing, and the STM-M signal after the virtual container cross connection is subject to the transparent cross connection and scheduled to a desired output port.

18. The method for performing service scheduling according to claim 16, wherein
each of the service processing units is provided with a transparent cross connect unit of small capacity;
the transparent cross connect units of small capacity are pairwise connected via distributed inter-connected buses, so that the service signals generated by each of the service processing units connected via the distributed inter-connected buses are scheduled through the distributed inter-connected buses.

19. The method for performing service scheduling according to claim 16, wherein
the dedicated cross connect unit is a packet switching unit;
the service processing unit is a data service processing unit for processing Ethernet services;
the data service processing unit on the client side accesses the Ethernet services;
packet signals generated after performing a packet processing for the Ethernet services are sent to the transparent cross connect unit via the inter-connected buses;
the packet signals are then sent to the packet switching unit via the transparent cross connect unit for further processing;
the packet signals processed by the packet switching unit are sent to the data service processing unit on the line side via the transparent cross connect unit.

20. The method for performing service scheduling according to claim 19, wherein a wavelength division multiplexing processing unit is arranged in a system, wherein
the data service processing unit on the line side further performs the packet processing and generates a converged Ethernet signal, the Ethernet signal is then modulated to an optical signal and sent to the wavelength division multiplexing processing unit for transmission.

21. The method for performing service scheduling according to claim 20, wherein
the converged Ethernet signal is mapped to the optical channel transport unit OTUk, modulated into the optical signal, and then sent to the wavelength division multiplexing processing unit for transmission.

22. The method for performing service scheduling according to claim 21, wherein
an optical layer processing is performed by adopting a reconfigurable optical add drop multiplexer or a photonic cross connect with wavelength scheduling capability, so as to achieve a scheduling on wavelength level.
